# EUROPEAN PATENT APPLICATION

(11) **EP 4 760 379 A1**
(43) Date of publication of application: **17.06.2026**
(21) Application number: 23949590.6
(22) Date of filing: 05.12.2023
(51) Int. Cl.: G02F 1/035

(54) **OPTICAL TRANSCEIVER AND MANUFACTURING METHOD THEREFOR**

(30) Priority: 21.08.2023 CN 202311064631
(71) Applicant: Wuhan Optical Valley Information Optoelectronics Innovation Center Co., Ltd, Wuhan, Hubei 430074 (CN)
(72) Inventor: LIU, Yang, Wuhan, Hubei 430074 (CN); XIAO, Xi, Wuhan, Hubei 430074 (CN); CHEN, Daigao, Wuhan, Hubei 430074 (CN); ZHANG, Hongguang, Wuhan, Hubei 430074 (CN)
(74) Representative: Regimbeau
(86) International application number: PCT/CN2023/136391
(87) International publication number: WO 2025/039412

(57) **Abstract**

Provided in the embodiments of the present disclosure are an optical transceiver and a manufacturing method therefor. The manufacturing method comprises: providing a base, the base comprising a substrate, a buried oxide layer and a lithium niobate layer which are successively stacked, and the base comprising a light modulation area and a light detection area; etching the lithium niobate layer located in the light modulation area so as to form a thin film lithium niobate waveguide; removing the lithium niobate layer and part of the buried oxide layer which are located in the light detection area, so as to form recesses, the bottoms of the recesses exposing the substrate; and forming a light absorption layer in the recesses, the thin film lithium niobate waveguide being used for modulating an optical signal and outputting the modulated optical signal, and the light absorption layer being used for detecting the modulated optical signal and converting the modulated optical signal into an electric signal.

## Description

### CROSS-REFERENCE TO RELATED APPLICATION

This application is based on and claims priority to Chinese patent No. 202311064631.5 filed on August 21, 2023, the disclosure of which is hereby incorporated by reference in by its entirety.

### TECHNICAL FIELD

The disclosure relates to the field of integrated optical devices, and more particularly to an optical transceiver and a method for manufacturing same.

### BACKGROUND

Lithium niobate has a photorefractive effect, a nonlinear effect, an electro-optical effect, an acousto-optic effect, a piezoelectric effect and a thermoelectric effect, and is widely used in acousto-optic modulation, electro-optical modulation, wavelength conversion and the like. Compared to conventional Lithium Niobate (LN) materials, Lithium Niobate on Insulator (LNOI) with a buried oxygen layer (i.e., silicon dioxide) introduced achieves a refractive index contrast of about 0.7 between a thin-film Lithium Niobate layer and the buried oxygen layer. Therefore, thin-film lithium niobate can be used to prepare optical devices with a smaller size, stronger electro-optical interaction, and a higher response rate, and has become an important platform for integrated photonics.

However, because lithium niobate has no physical mechanism for realizing light emission and photoelectric conversion, a thin-film lithium niobate based integrated photonic circuit has no light source or photodetector for realizing conversion of optical signals into electric signals. The lack of light source and photodetector makes it impossible for the thin-film lithium niobate based integrated photonic circuit to realize on-chip electric-to-optical and optical-to-electric conversion, which has become a major bottleneck for the practicability of the thin-film lithium niobate based integrated photonic technology.

### SUMMARY

In view of this, embodiments of the disclosure provide an optical transceiver and a method of manufacturing same.

To achieve the above purpose, the technical solution of the disclosure is implemented as follows.

In a first aspect, embodiments of the disclosure provide a method for manufacturing an optical transceiver. The method includes: providing a substrate, wherein the substrate includes an underlayer, a buried oxygen layer, and a lithium niobate layer successively stacked, and the substrate includes an optical modulation region and an optical detection region; etching the lithium niobate layer located in the optical modulation region to form a thin-film lithium niobate waveguide; removing the lithium niobate layer located in the optical detection region and a portion of the buried oxygen layer located in the optical detection region to form a groove, wherein the underlayer is exposed at bottom of the groove; and forming a light absorbing layer within the groove, wherein the thin-film lithium niobate waveguide is used for modulating an optical signal and outputting a modulated optical signal, and the light absorbing layer is used for detecting the modulated optical signal and converting the modulated optical signal into an electric signal.

In some embodiments, etching the lithium niobate layer located in the optical modulation region to form the thin-film lithium niobate waveguide includes: etching, in a direction perpendicular to the underlayer, the lithium niobate layer located in the optical modulation region to form the thin-film lithium niobate waveguide; wherein an etching depth of the lithium niobate layer is smaller than a thickness of the lithium niobate layer; and after etching the lithium niobate layer located in the optical modulation region to form the thin-film lithium niobate waveguide, the method further includes: forming multiple first metal electrodes on the lithium niobate layer.

In some embodiments, etching the lithium niobate layer located in the optical modulation region to form the thin-film lithium niobate waveguide includes: etching, in a direction perpendicular to the underlayer, the lithium niobate layer located in the optical modulation region to form the thin-film lithium niobate waveguide and expose the buried oxygen layer; wherein an etching depth of the lithium niobate layer is equal to a thickness of the lithium niobate layer; and after etching the lithium niobate layer located in the optical modulation region to form the thin-film lithium niobate waveguide, the method further includes: forming multiple first metal electrodes on the buried oxygen layer.

In some embodiments, the substrate further includes an optical coupling region located between the optical modulation region and the optical detection region; and the method further includes: removing the lithium niobate layer located in the optical coupling region and a portion of the underlayer located in the optical coupling region to form an air cavity between a remaining portion of the underlayer and the buried oxygen layer; wherein the buried oxygen layer located in the optical coupling region forms a floating waveguide; and the floating waveguide is used for coupling the modulated optical signal to the light absorbing layer.

In some embodiments, removing the lithium niobate layer located in the optical detection region and the portion of the buried oxygen layer located in the optical detection region to form the groove includes: removing the lithium niobate layer located in the optical detection region to expose the buried oxygen layer; etching, in a direction perpendicular to the underlayer, the buried oxygen layer located in the optical detection region to form the groove; wherein a depth of the groove is equal to a thickness of the buried oxygen layer.

In some embodiments, after removing the lithium niobate layer located in the optical detection region and the portion of the buried oxygen layer located in the optical detection region to form the groove, the method further includes: doping portions of the underlayer that are located at bottom of the groove and are disposed on two opposite sides of the groove in a direction perpendicular to an optical signal transmission direction, to form a first doped region and a second doped region respectively; and after forming the light absorbing layer within the groove, the method further includes: removing the buried oxygen layer located in the optical detection region to expose a surface of the first doped region and a surface of the second doped region; and forming a second metal electrode and a third metal electrode on the first doped region and the second doped region respectively.

In some embodiments, a material of the underlayer includes silicon; and a material of the light absorbing layer includes germanium or a III-V material.

In a second aspect, embodiments of the disclosure provide an optical transceiver, including: a lithium niobate modulator, an optical coupling structure and a photodetector that are located on a substrate, wherein the optical coupling structure is provided between the lithium niobate modulator and the photodetector; and the substrate includes an underlayer, a buried oxygen layer, and a lithium niobate layer which are successively stacked; the lithium niobate modulator includes: the underlayer, the buried oxygen layer on the underlayer, and a thin-film lithium niobate waveguide on the buried oxygen layer; and the thin-film lithium niobate waveguide is formed by etching the lithium niobate layer; the optical coupling structure includes: a silicon layer, a floating waveguide, and an air cavity provided between the silicon layer and the floating waveguide; the silicon layer is formed by etching a portion of the underlayer; and the floating waveguide is formed by the buried oxygen layer; and the photodetector includes: the underlayer and a light absorbing layer on the underlayer; the thin-film lithium niobate waveguide is used for modulating an optical signal and outputting a modulated optical signal; the floating waveguide is used for coupling the modulated optical signal to the light absorbing layer; and the light absorbing layer is used for detecting the modulated optical signal and converting the modulated optical signal into an electric signal.

In some embodiments, the lithium niobate modulator further includes: a first metal electrode in contact with the thin-film lithium niobate waveguide or in contact with the buried oxygen layer.

In some embodiments, the photodetector further includes: a first doped region and a second doped region, wherein the first doped region and the second doped region are formed by doping the underlayer; and the light absorbing layer is located between the first doped region and the second doped region; and a second metal electrode and a third metal electrode located on the first doped region and the second doped region respectively.

Embodiments of the disclosure provide an optical transceiver and a method for manufacturing same. The method includes following. A substrate is provided. The substrate includes an underlayer, a buried oxygen layer, and a lithium niobate layer successively stacked. The substrate includes an optical modulation region and an optical detection region. The lithium niobate layer located in the optical modulation region is etched to form a thin-film lithium niobate waveguide. The lithium niobate layer located in the optical detection region and a portion of the buried oxygen layer located in the optical detection region are removed to form a groove. The underlayer is exposed at bottom of the groove. A light absorbing layer is formed within the groove. The thin-film lithium niobate waveguide is used for modulating an optical signal and outputting a modulated optical signal, and the light absorbing layer is used for detecting the modulated optical signal and converting the modulated optical signal into an electric signal. In embodiments of the disclosure, a substrate includes an underlayer, a buried oxygen layer and a lithium niobate layer successively stacked. A thin-film lithium niobate waveguide is formed by etching, the lithium niobate layer and the buried oxygen layer that are located in the optical detection region are etched and removed to form a groove exposing the underlayer. A light absorbing layer is further formed in the groove, so that a lithium niobate modulator and a photodetector can be integrated on the same underlayer. The thin-film lithium niobate waveguide is used to modulate an optical signal and output a modulated optical signal to the optical absorbing layer, and the optical absorbing layer detects the modulated optical signal and converts the modulated optical signal into an electric signal.

### BRIEF DESCRIPTION OF THE DRAWINGS

FIG. 1 illustrates a schematic flowchart of a method for manufacturing an optical transceiver according to embodiments of the disclosure.
FIG. 2A illustrates a schematic structural diagram of an optical transceiver according to embodiments of the disclosure.
FIG. 2B illustrates a lateral view of an optical transceiver according to embodiments of the disclosure.
FIGS. 3A to 3H illustrate schematic diagrams of a cross-section structure of a lithium niobate modulator during manufacturing according to embodiments of the disclosure.
FIGS. 4A to 4H illustrate schematic diagrams of a cross-section structure of an optical transceiver according to embodiments of the disclosure.
FIG. 5 illustrates a schematic stereo-structural diagram of a photodetector according to embodiments of the disclosure.
FIG. 6 illustrates a schematic diagram of a cross-section structure of a photodetector and a lithium niobate modulator according to embodiments of the disclosure.
FIG. 7 illustrates a schematic diagram of a cross-section structure of an optical transceiver according to embodiments of the disclosure.

### DETAILED DESCRIPTION

Technical solutions of the embodiments of the disclosure will be described clearly and completely below in conjunction with the drawings of the embodiments of the disclosure. Apparently, the described embodiments are merely some rather than all embodiments of the disclosure. All other embodiments obtained by those skilled in the art based on the embodiments of the disclosure without paying any inventive effort shall fall within the scope of protection of the disclosure.

In the following description, many specific details are given in order to provide a more thorough understanding of the disclosure. However, it will be apparent to those skilled in the art that the disclosure may be practiced without one or more of these details. In other examples, in order to avoid confusion with the disclosure, some technical features well known in the art are not described. That is, not all features of actual embodiments are described herein, and well-known functions and structures will not be described in detail.

In the drawings, dimensions of layers, regions, elements, and their relative scales may be exaggerated for clarity. Similar reference numerals denote similar elements throughout.

It should be understood that when an element or layer is referred to as "on", "adjacent to", "connected to", or "coupled to", another element or layer, it may be directly on, adjacent to, connected to, or coupled to the another element or layer, or an intervening element or layer may be present. Conversely, when an element is referred to as "directly on," "directly adjacent to," "directly connected to," or "directly coupled to" another element or layer, there is no intervening element or layer. It should be understood that although the terms "first", "second", "third", etc. may be used to describe various elements, components, regions, layers, and/or portions, these elements, components, regions, layers, and/or portions should not be limited by these terms. These terms are merely used to distinguish one element, component, region, layer or portion from another element, component, region, layer or portion. Accordingly, a first element, component, region, layer, or portion discussed below may be denoted as a second element, component, region, layer, or portion without departing from the teachings of the disclosure. While a second element, component, region, layer, or portion is discussed, it does not mean that a first element, component, region, layer, or portion is necessarily present in the disclosure.

Spatial relational terms such as "under", "below", "above", "on", "over" and the like may be used herein for convenience of description to describe the relation of one element or feature illustrated in the drawing with another element or feature. It should be understood that in addition to the orientations shown in the drawings, the spatial relationship terms are intended to include different orientations of devices in use and operation. For example, if a device in the drawings is inverted, then an element or feature described as "under" or "below" another element will be oriented as "above/on/over" the another element or feature. Accordingly, the exemplary terms "under" and "below" may include two orientations of being above and under. The devices may be otherwise oriented (rotated by 90 degrees or in another orientation) and the spatial descriptive terms used herein are interpreted accordingly.

The terminology used herein is for the purpose of describing specific embodiments only and is not intended to limit the disclosure. As used herein, the singular forms "a", "an", and "the" are also intended to include the plural forms unless it is clearly indicated otherwise in the context. It should also be understood that the terms "comprise" and/or "include", when used in this description, determine the presence of the stated feature(s), integer(s), step(s), operation(s), element(s), and/or component(s), but do not preclude the presence or addition of one or more other features, integers, steps, operations, elements, components, and/or groups. As used herein, the term "and/or" includes any and all combinations of the relevant listed items.

In order to thoroughly understand the disclosure, detailed steps and detailed structures will be proposed in the following description in order to explain the technical solutions of the disclosure. Preferred embodiments of the disclosure are described in detail below, but the disclosure may have other embodiments in addition to these detailed described.

Silicon photonics is a new generation of technology that develops and integrates optical devices using an existing Complementary Metal Oxide Semiconductor (CMOS) process based on silicon and silicon-based underlayer materials such as SiGe/Si and Silicon-On-Insulator (SOI). The properties of an ultra-large scale and an ultra-high precision of manufacturing of the integrated circuit technology are combined with the advantages of an ultra-high speed and an ultra-low power consumption of the photonic technology. Silicon photonics is a disruptive technology to deal with the failure of Moore's Law. Such combination benefits from the scalability of semiconductor wafer fabrication, thus enabling mass production and cost reduction. Both optical modulators and detectors are core active devices in silicon-based photonics.

The upper limit of the bandwidth of pure silicon optical modulators implemented based on the carrier dispersion effect is about 80GHz, and there is little room for improvement at this stage. The theoretical bandwidth of lithium niobate thin-film optical modulators can reach 500GHz, has an attractive development prospect, and has developed rapidly domestic and overseas in recent years. III-V optical detectors and silicon germanium optical detectors have a high upper limit of bandwidth, and have been reported to achieve 265GHz. Therefore, it will be a technical trend to integrate a lithium niobate thin-film optical modulator and an optical detector into a photonic chip, to effectively solve the existing problem of a limited bandwidth. Furthermore, the scheme of stacking photonic chips, electrical chips and laser chips in three dimensions to achieve heterogeneous integration will further improve the overall performance of the chips.

In the related art, a method of integrating a light source and a detector on a thin-film lithium niobate based integrated photonic circuit is mainly hybrid integration, such as bonding. A lithium niobate modulator and photodetector obtained by such hybrid integration face challenges in reliability and manufacturability.

To this end, embodiments of the disclosure provide an optical transceiver and a method for manufacturing same.

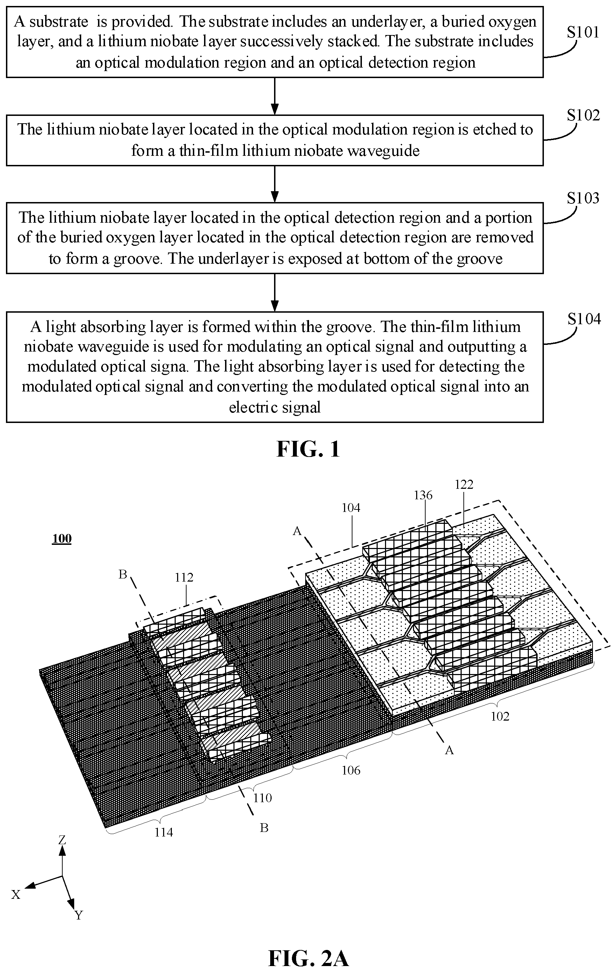

Referring to FIG. 1, FIG. 1 illustrates a schematic flowchart of a method for manufacturing an optical transceiver according to embodiments of the disclosure. As illustrated in FIG. 1, embodiments of the disclosure provide a method for manufacturing an optical transceiver. The method includes operations S101 to S104.

At operation S101, a substrate is provided. The substrate includes an underlayer, a buried oxygen layer, and a lithium niobate layer successively stacked. The substrate includes an optical modulation region and an optical detection region.

At operation S102, the lithium niobate layer located in the optical modulation region is etched to form a thin-film lithium niobate waveguide.

At operation S103, the lithium niobate layer located in the optical detection region and a portion of the buried oxygen layer located in the optical detection region are removed to form a groove. The underlayer is exposed at bottom of the groove.

At operation S104, a light absorbing layer is formed within the groove. The thin-film lithium niobate waveguide is used for modulating an optical signal and outputting a modulated optical signal. The light absorbing layer is used for detecting the modulated optical signal and converting the modulated optical signal into an electric signal.

In embodiments of the disclosure, after the thin-film lithium niobate waveguide is formed, the lithium niobate layer and the buried oxygen layer that are located in the optical detection region are etched and removed to form a groove exposing the underlayer. The light absorbing layer is further formed in the groove, so that a lithium niobate modulator and a photodetector can be integrated on the same underlayer. The thin-film lithium niobate waveguide is used to modulate an optical signal and output a modulated optical signal to the optical absorbing layer, and the optical absorbing layer detects the modulated optical signal and converts the modulated optical signal into an electric signal. In the embodiments of the disclosure, the thin-film lithium niobate waveguide and a photoelectric absorbing layer (for example, a III-V material and a germanium material) may be integrated on the same underlayer to realize heterogeneous integration of the lithium niobate modulator and the photodetector.

Before introducing the optical transceiver and the manufacturing method therefor according to the embodiments of the disclosure, various directions that may be involved in the embodiments of the disclosure are defined. A direction perpendicular to an underlayer is defined as a Z direction, and an X direction and a Y direction are defined in a plane perpendicular to the Z direction. The X direction and the Y direction may intersect with each other. In a particular embodiment, the X direction and the Y direction may be perpendicular to each other, so that the X direction, the Y direction and the Z direction are perpendicular to each other. Here, an optical signal transmission direction is defined as the X direction, and a cross-section perpendicular to the optical signal transmission direction is the YZ plane.

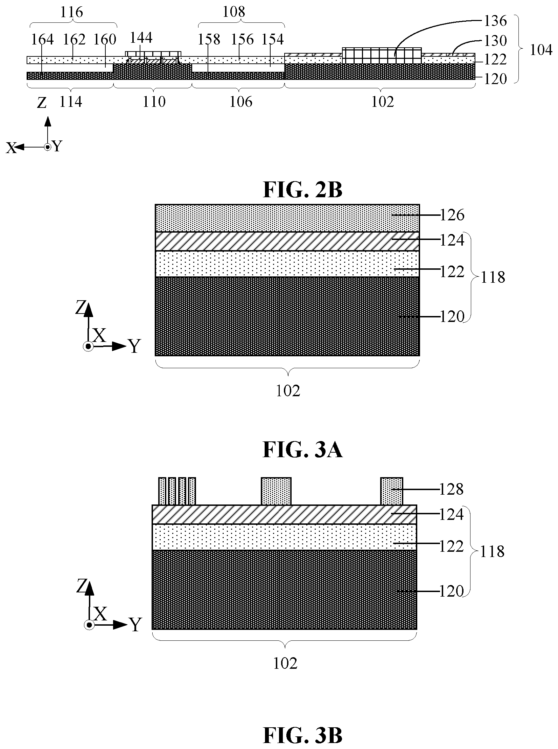

Referring to FIGS. 2A and 2B, FIG. 2A illustrates a schematic structural diagram of an optical transceiver according to embodiments of the disclosure, and FIG. 2B illustrates a lateral view of an optical transceiver according to embodiments of the disclosure.

As illustrated in FIGS. 2A and 2B, an optical transceiver 100 includes an optical modulation region 102, a first optical coupling region 106, and an optical detection region 110. The first optical coupling region 106 is located between the optical modulation region 102 and the optical detection region 110. A modulator, such as a lithium niobate modulator 104, may be formed in the optical modulation region 102. A first optical coupling structure 108 may be formed in the first optical coupling region 106. A photodetector 112 may be formed in the optical detection region 110. That is, the lithium niobate modulator 104 in the optical modulation region 102 may be used to modulate an optical signal and output a modulated optical signal. The first optical coupling structure 108 in the first optical coupling region 106 may be used to couple the modulated optical signal to the optical detection region 110. The photodetector 112 in the optical detection region 110 may be used to convert the modulated optical signal into an electric signal.

In some embodiments, the optical transceiver 100 may further include a second optical coupling region 114, and the optical transceiver 100 sequentially includes the lithium niobate modulator 104, the first optical coupling structure 108, the photodetector 112, and a second optical coupling structure 116 along the optical signal transmission direction. An optical signal not coupled to the optical detection region 110 may be coupled to the second optical coupling structure 116 within the second optical coupling region 114 and output.

Referring to FIGS. 3A to 3H, FIGS. 3A to 3H illustrate schematic diagrams of a cross-section structure of a lithium niobate modulator during manufacturing according to embodiments of the disclosure. FIGS. 3A to 3H illustrate schematic diagrams of a cross-section structure of the optical modulation region. The cross-section is perpendicular to the optical signal transmission direction, that is, the cross-section is the YZ plane of the optical modulation region. Hereinafter, the process of manufacturing the lithium niobate modulator according to the embodiments of the disclosure will be described in detail with reference to FIGS. 3A to 3H.

In embodiments of the disclosure, at operation S101, a substrate 118 is provided. The substrate 118 includes an underlayer 120, a buried oxygen layer 122, and a lithium niobate layer 124 successively stacked. The substrate 118 includes an optical modulation region 102 and an optical detection region 110.

Combining FIG. 2A with FIG. 3A, the substrate 118 includes the underlayer 120, the buried oxygen layer 122, and the lithium niobate layer 124 successively stacked. The substrate 118 includes the optical modulation region 102, the first optical coupling region 106, the optical detection region 110, and the second optical coupling region 114, which are arranged sequentially. FIG. 3A illustrates only a schematic diagram of a cross-section structure of the substrate 118 located within the optical modulation region 102.

Here, the substrate may for example be lithium niobate on insulator, and includes an optical modulation region and an optical detection region, and also a first optical coupling region located between the optical modulation region and the optical detection region along the optical signal transmission direction (i.e., the X direction). The substrate includes an underlayer, a buried oxygen layer, and a lithium niobate layer stacked successively along the Z direction. The material of the underlayer may be, for example, silicon. The material of the buried oxygen layer is silicon dioxide. The lithium niobate layer is a lithium niobate thin film.

In embodiments of the disclosure, at operation S102, the lithium niobate layer 124 located in the optical modulation region 102 is etched to form a thin-film lithium niobate waveguide 130.

Here, the lithium niobate layer located in the optical modulation region is etched along the Z direction. There may be two cases according to an etching depth. In some embodiments, an etching depth of the lithium niobate layer is less than a thickness of the lithium niobate layer. In other words, the buried oxygen layer is not exposed after the lithium niobate layer is etched to form the thin-film lithium niobate waveguide. In some other embodiments, the etching depth of the lithium niobate layer is the same as the thickness of the lithium niobate layer. In other words, the buried oxygen layer is exposed after the lithium niobate layer is etched to form the thin-film lithium niobate waveguide.

In some embodiments, the operation S520 includes: the lithium niobate layer 124 located in the optical modulation region 120 is etched in a direction (i.e., the Z direction) perpendicular to the underlayer 120, to form the thin-film lithium niobate waveguide 130. An etching depth of the lithium niobate layer 124 is smaller than a thickness of the lithium niobate layer 124.

After operation S102, the method further includes: multiple first metal electrodes 136 are formed on the lithium niobate layer 124.

As illustrated in FIG. 3A, a first photoresist layer 126 covering the substrate 118 is formed.

Exemplarily, the formation of the first photoresist layer may be achieved by spin coating. A first photoresist solution is coated onto the substrate. With the centrifugal force generated by spinning, the first photoresist solution can be uniformly distributed on the surface of the substrate. The first photoresist layer is formed after the solvent in the first photoresist solution is volatilized by baking.

In a particular embodiment, the material of the first photoresist layer may, for example, be an electron beam photoresist, such as Hydrogen Silsesquioxane Polymer (HSQ). Of course, other materials may also be used to form the first photoresist layer in the embodiments of the disclosure.

It is to be noted that the first photoresist layer may cover the optical modulation region, the first optical coupling region, the optical detection region, and the second optical coupling region of the substrate. FIG. 3A only illustrates the first photoresist layer covering the substrate located within the optical modulation region.

Combining FIGS. 3A and 3B, after forming the first photoresist layer 126 covering the substrate 118, the first photoresist layer 126 may be patterned with a mask layer (not shown in FIG. 3B) to form a patterned first photoresist layer 128.

Exemplarily, the mask layer may be formed on the first photoresist layer. After alignment, an exposure process may be performed so that a pattern of the mask layer is transferred to the first photoresist layer. A patterned first photoresist layer is formed after removing a portion of the material of the first photoresist layer.

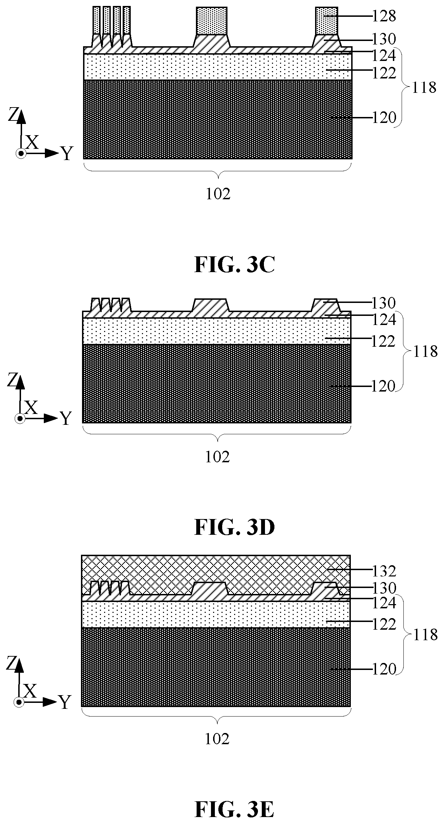

Combining FIGS. 3B and 3C, a portion of the lithium niobate layer 124 is removed by etching in the Z direction by the patterned first photoresist layer 128 to form a thin-film lithium niobate waveguide 130. In this case, an etching depth of the lithium niobate layer 124 is smaller than a thickness of the lithium niobate layer 124, and the buried oxygen layer 122 is not exposed after the thin-film lithium niobate waveguide 130 is formed by etching. Here, both the etching depth and the thickness of the lithium niobate layer 124 refer to dimensions in the Z direction.

In some embodiments, the thin-film lithium niobate waveguide may, for example, be a ridge-shaped optical waveguide, which may include a 2×2 beam splitter, a Mach-Zehnder waveguide, and a 2×2 beam combiner; The Mach-Zehnder waveguide may include two optical waveguide arms. Output ends of the 2 × 2 beam splitter are connected with input ends of the 2 × 2 beam combiner through the Mach-Zehnder waveguide. That is, the 2 × 2 beam splitter and the 2 × 2 beam combiner are connected to each other by the two optical waveguide arms. Actually, the shape of the thin-film lithium niobate waveguide is not particularly limited in the embodiments of the disclosure.

In some embodiments, the process of forming the thin-film lithium niobate waveguide by etching may include, but is not limited to, dry etching. Actually, the process of forming the thin-film lithium niobate waveguide by etching is not particularly limited in the embodiments of the disclosure.

Combining FIGS. 3C and 3D, after the thin-film lithium niobate waveguide 130 is formed by etching, the patterned first photoresist layer 128 is removed to expose the thin-film lithium niobate waveguide 130.

In some embodiments, the patterned first photoresist layer may be removed by dissolution with solvent, or the patterned first photoresist layer may be removed by an etching process. The process of removing the patterned first photoresist layer is not particularly limited in the embodiments of the disclosure.

As illustrated in FIG. 3E, a second photoresist layer 132 covering the thin-film lithium niobate waveguide 130 is formed.

Exemplarily, the formation of the second photoresist layer may be achieved by spin coating. A second photoresist solution is coated onto the substrate. With the centrifugal force generated by spinning, the second photoresist solution can be uniformly distributed on the surface of the substrate. The second photoresist layer is formed after the solvent in the second photoresist solution is volatilized by baking.

The material of the second photoresist layer is not particularly limited in the embodiments of the disclosure.. In some embodiments, the material of the first photoresist layer and the material of the second photoresist layer may be the same or different.

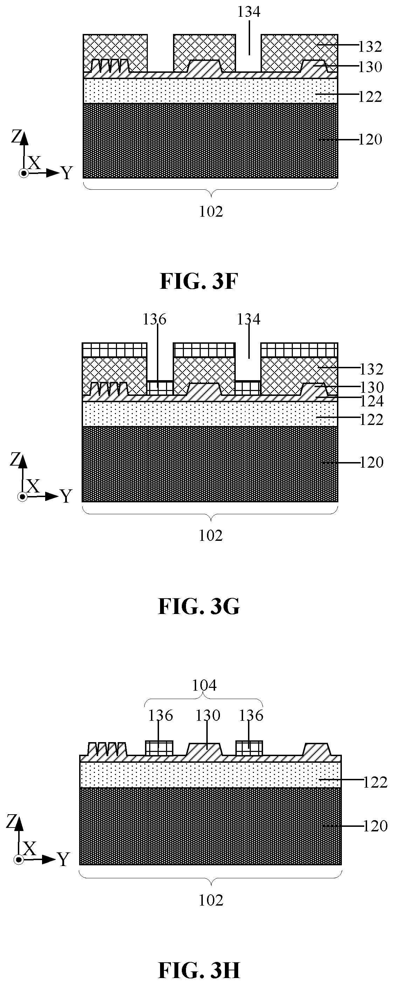

As illustrated in FIG. 3F, after forming the second photoresist layer 132 covering the thin-film lithium niobate waveguide 130, the second photoresist layer 132 may be patterned with a mask layer (not shown in FIG. 3F) to form an opening 134 exposing the lithium niobate layer. FIG. 3F illustrates that the opening 134 of the second photoresist layer may be located between adjacent ridge-shaped optical waveguides.

Similarly, the mask layer may be formed on the second photoresist layer. After alignment, an exposure process may be performed so that a pattern of the mask layer is transferred to the second photoresist layer. A patterned second photoresist layer is formed after removing a portion of the material of the second photoresist layer.

As illustrated in FIG. 3G, a conductive material is deposited within the opening 134 of the second photoresist layer to form a first metal electrode 136. The first metal electrode 136 is in contact with the lithium niobate layer 124. Here, in the process of depositing the conductive material in the opening 134 of the second photoresist layer, the conductive material also covers the second photoresist layer 132.

In some embodiments, processes for forming the first metal electrode may include, but are not limited to, Chemical Vapor Deposition (CVD), Physical Vapor Deposition (PVD), Plasma Enhanced Chemical Vapor Deposition (PECVD), a sputtering process, an electroplating process, and the like.

In some embodiments, the material of the first metal electrode may include, but is not limited to, gold (Au), indium (In), or a gold tin alloy (AuSn).

As illustrated in FIG. 3H, the conductive material covering the second photoresist layer 132 is removed and the second photoresist layer 132 is removed to expose a surface of the thin-film lithium niobate waveguide 130.

In embodiments of the disclosure, a lithium niobate modulator is formed in the optical modulation region. An optical signal is transmitted to the thin-film lithium niobate waveguide. A refractive index of the thin-film lithium niobate waveguide is changed by applying a voltage to the first metal electrode, so that a phase difference is generated between optical signals passing through the two waveguide arms of the Mach-Zehnder waveguide. An amplitude of output light is changed due to interference after passing through a 2 × 2 beam combiner, thereby realizing the modulation of the optical signal.

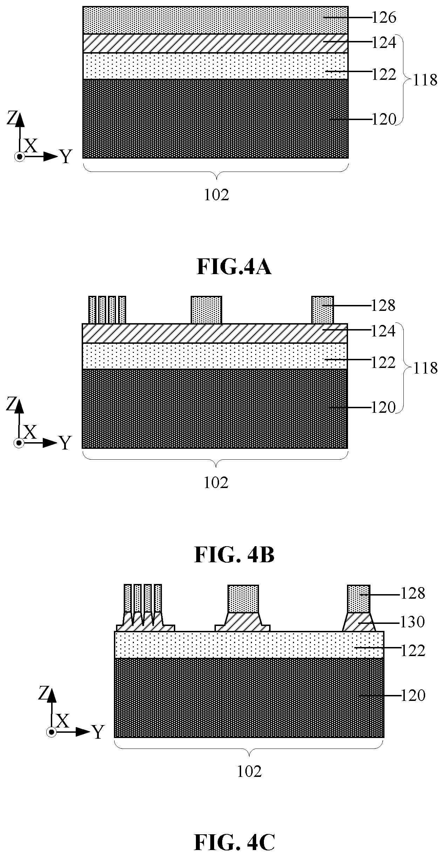

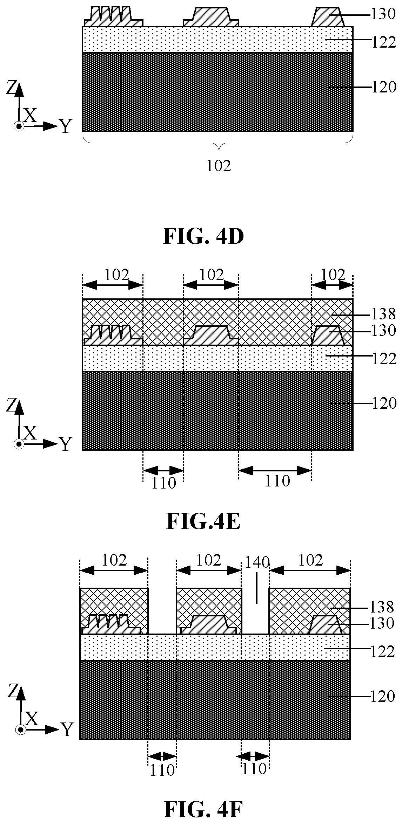

Referring to FIGS. 4A to 4H, FIGS. 4A to 4H illustrate schematic diagrams of a cross-section structure of an optical transceiver according to embodiments of the disclosure. FIGS. 4A to 4D merely illustrate schematic diagrams of a cross-section structure of the optical modulation region. Combined with FIG. 2A, FIGS. 4A to 4D illustrate schematic diagrams of the cross-section structure of the optical modulation region being perpendicular to the optical signal transmission direction, that is, the cross-section is the YZ plane of the optical modulation region. FIGS. 4E to 4H illustrate schematic diagrams of a cross-section structure of the optical modulation region and the optical detection region. Combined with FIG. 2A, FIGS. 4E to 4H illustrate schematic diagrams of the cross-section structure of the optical modulation region and the optical detection region being perpendicular to the optical signal transmission direction, that is, the cross-section is the YZ plane of the optical modulation region. Hereinafter, the process of manufacturing the optical transceiver according to the embodiments of the disclosure will be described in detail with reference to FIGS. 4A to 4H.

For convenience of illustration, FIGS. 4E-4H illustrate that an optical detection region is located between adjacent optical modulation regions, which do not represent the actual relative positional relationship between the optical modulation regions and the photodetector. The optical modulation regions illustrated in FIGS. 4E to 4H may be regarded as schematic diagrams of a cross-section structure along the AA direction in FIG. 2A, and the optical detection regions illustrated in FIGS. 4E to 4H may be regarded as schematic diagrams of a cross-section structure along the BB direction in FIG. 2A.

Hereinafter, the process of forming the thin-film lithium niobate waveguide in the optical modulation region will be described in detail with reference to FIGS. 4A to 4D.

Combining FIG. 2A with FIG. 4A, the substrate 118 includes the underlayer 120, the buried oxygen layer 122, and the lithium niobate layer 124 successively stacked. The substrate 118 includes the optical modulation region 102, the first optical coupling region 106, the optical detection region 110, and the second optical coupling region 114, which are arranged sequentially. FIG. 4A illustrates only a schematic diagram of a cross-section structure of the substrate 118 located within the optical modulation region 102.

In embodiments of the disclosure, the operation S102 includes: the lithium niobate layer 124 located in the optical modulation region 120 is etched in a direction (i.e., the Z direction) perpendicular to the underlayer 120, to form the thin-film lithium niobate waveguide 130 and expose the buried oxygen layer. An etching depth of the lithium niobate layer 124 is equal to a thickness of the lithium niobate layer 124.

After operation S102, the method further includes: multiple first metal electrodes 136 are formed on the buried oxygen layer 122.

As illustrated in FIG. 4A, a first photoresist layer 126 covering the substrate 118 is formed.

As illustrated in FIG. 4B, after forming the first photoresist layer 126 covering the substrate 118, the first photoresist layer 126 may be patterned with a mask layer (not shown in FIG. 4B) to form a patterned first photoresist layer 128.

Combining FIGS. 4B and 4C, a portion of the lithium niobate layer 124 is removed by etching in the Z direction by the patterned first photoresist layer 128 to form a thin-film lithium niobate waveguide 130. In this case, an etching depth of the lithium niobate layer 124 is equal to a thickness of the lithium niobate layer 124, and the buried oxygen layer 122 is exposed after the thin-film lithium niobate waveguide 130 is formed by etching. Here, both the etching depth and the thickness of the lithium niobate layer 124 refer to dimensions in the Z direction.

Combining FIGS. 4C and 4D, after the thin-film lithium niobate waveguide 130 is formed by etching, the patterned first photoresist layer 128 is removed to expose the thin-film lithium niobate waveguide 130.

In the lithium niobate modulator 104 illustrated in FIGS. 3A to 3H, the first metal electrodes 136 are in contact with the lithium niobate layer 124, while in the lithium niobate modulator 104 illustrated in FIGS. 4A to 4D, the first metal electrodes 136 are subsequently formed in contact with the buried oxygen layer 122. The specific process of forming the first metal electrodes 136 may refer to the relevant text description about FIGS. 3E to 3H, and will not be repeated herein.

Hereinafter, the process of forming the light absorbing layer in the optical detection region will be described in detail with reference to FIGS. 4A to 4H.

In embodiments of the disclosure, at operation S103, the lithium niobate layer 124 located in the optical detection region 110 and a portion of the buried oxygen layer 122 located in the optical detection region 110 are removed to form a groove 142. The underlayer 120 is exposed at bottom of the groove 142.

In embodiments of the disclosure, the operation S103 includes: the lithium niobate layer 124 located in the optical detection region 110 is removed to expose the buried oxygen layer 122; and the buried oxygen layer 122 located in the optical detection region 110 is etched in a direction perpendicular to the underlayer 120 (namely, the Z direction) to form the groove 142. A depth of the groove 142 is equal to a thickness of the buried oxygen layer 122.

Combining FIGS. 2B and 4E, the lithium niobate layer 124 located in the optical detection region 110 may be removed to expose the surface of the buried oxygen layer 122, and a third photoresist layer 138 covering the buried oxygen layer 122 located in the optical detection region 110 is formed. Here, the third photoresist layer 138 covers both the buried oxygen layer 122 located in the optical detection region 110 and the thin film-lithium niobate waveguide 130 located in the optical modulation region 102.

Exemplarily, the formation of the third photoresist layer may be achieved by spin coating.

A material of the third photoresist layer is not particularly limited in the embodiments of the disclosure. In some embodiments, the materials of the first photoresist layer, the second photoresist layer and the third photoresist layer may be the same or different.

Combining FIG. 4E and FIG. 4F, after forming the third photoresist layer 138 covering the thin-film lithium niobate waveguide 130, the third photoresist layer 138 may be patterned with a mask layer (not shown in FIG. 4F) to form an opening 140 exposing the buried oxygen layer 122. FIG. 4F illustrates that the opening 140 of the third photoresist layer may exposes the buried oxygen layer 122 located in the optical detection region 110.

Similarly, the mask layer may be formed on the third photoresist layer. After alignment, an exposure process may be performed so that a pattern of the mask layer is transferred to the third photoresist layer. A patterned third photoresist layer is formed after removing a portion of the material of the third photoresist layer.

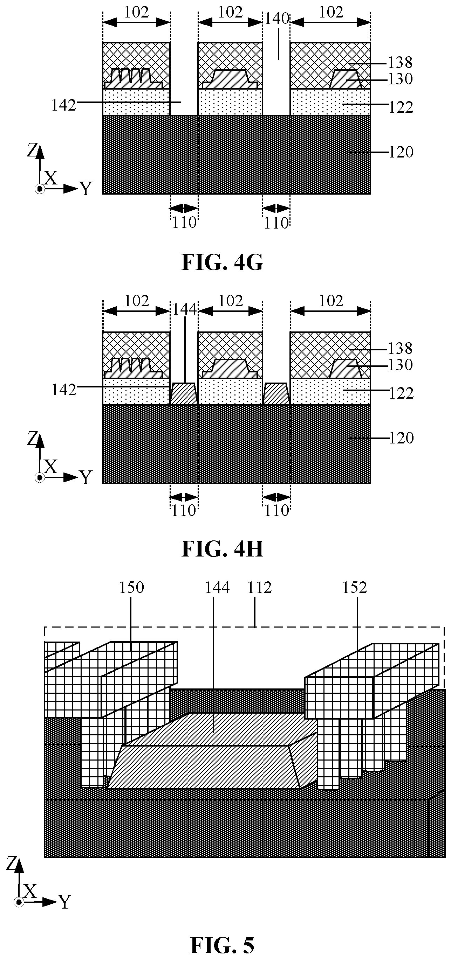

As illustrated in FIG. 4G, the buried oxygen layer 122 located in the optical detection region 110 is etched in the Z direction to form the groove 142. A depth of the groove 142 is equal to a thickness of the buried oxygen layer 122. An etching depth of the buried oxygen layer 122 is the same as a thickness of the buried oxygen layer 122, that is, the buried oxygen layer 122 is etched through. That is, the surface of the underlayer 120 is exposed at the bottom of the groove 142 formed by etching.

In some embodiments, the buried oxygen layer located in the optical detection region may be etched using a process that combines dry etching and wet etching.

In embodiments of the disclosure, at operation S104, a light absorbing layer 144 is formed within the groove 142. The thin-film lithium niobate waveguide 130 is used for modulating an optical signal and outputting a modulated optical signal. The light absorbing layer 144 is used for detecting the modulated optical signal and converting the modulated optical signal into an electric signal.

As illustrated in FIG. 4H, the light absorbing layer 144 may be formed in the groove 142, and the light absorbing layer 144 is in contact with the buried oxygen layer 122.

In some embodiments, the process of forming the light absorbing layer may include, but is not limited to, CVD.

It is to be noted that the bottom of the thin-film lithium niobate waveguide in the optical modulation region is in contact with the buried oxygen layer, and the bottom of the light absorbing layer in the optical detection region is in contact with the underlayer. That is, the heights of the bottom of the thin-film lithium niobate waveguide in the optical modulation region and the bottom of the light absorbing layer in the optical detection region along the Z direction are different from each other. In order to facilitate the explanation of the height difference between the bottom of the thin-film lithium niobate waveguide in the optical modulation region and the bottom of the light absorbing layer in the optical detection region, FIGS. 4E to 4H illustrate schematic diagrams of a cross-section structure of both the optical modulation region 102 and the optical detection region 110.

In embodiments of the disclosure, a material of the light absorbing layer 144 includes germanium or a III-V material.

It is to be noted that, lithium niobate crystals used in the modulator belongs to a trigonal system and have lattice constants of 0.5147 nm and 1.3856 nm, respectively. Among the materials of the light absorbing layer of the photodetector, a III-V material, such as gallium arsenide, has a lattice constant of 0.565 nm, and germanium has a lattice constant of 0.5657 nm. Therefore, the lattice mismatch between the lithium niobate crystal used in the modulator and the III-V material and the germanium material that are used in the photodetector is > 9%. That is to say, it is difficult to obtain high-quality gallium arsenide and germanium single crystal directly by epitaxial growth on the lithium niobate crystals. As a result, the prepared optical transceiver will face challenges in reliability and manufacturability.

In embodiments of the disclosure, the lithium niobate layer located in the optical modulation region is etched to form a thin-film lithium niobate waveguide, and the lithium niobate layer and the buried oxygen layer that are located in the optical detection region are etched and removed to form a groove exposing the underlayer. A light absorbing layer is further formed within the groove. The lattice mismatch between the underlayer (e.g., silicon) and the light absorbing layer (e.g., a III-V material and germanium) is small, and the deposition of high-quality III-V material or germanium material can be achieved on the underlayer, so that the lithium niobate modulator and photodetector can be integrated on the same underlayer.

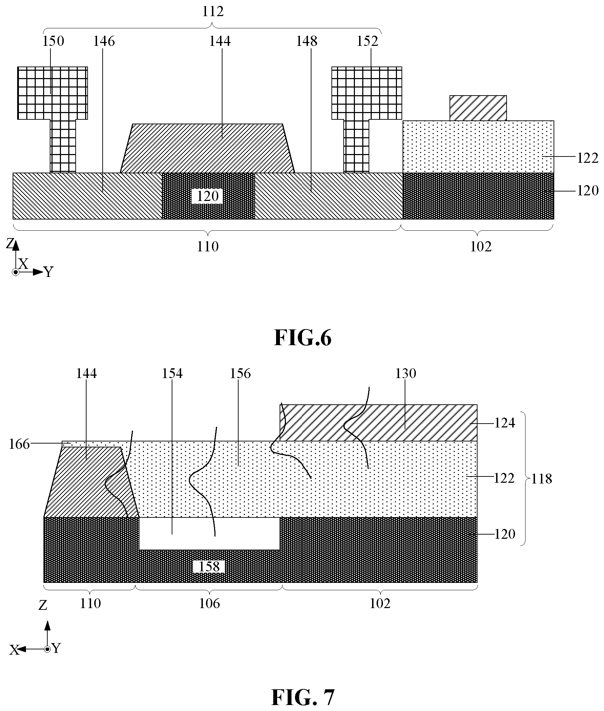

Referring to FIGS. 5 and 6, FIG. 5 illustrates a schematic stereo-structural diagram of a photodetector according to embodiments of the disclosure, and FIG. 6 illustrates a schematic diagram of a cross-section structure of a photodetector and a lithium niobate modulator according to embodiments of the disclosure.

For convenience of explanation, FIG. 6 illustrates a schematic diagram of a cross-section structure of both the optical modulation region 102 and the optical detection region 110 in a direction perpendicular to the optical signal transmission direction, which does not represent the actual relative positional relationship between the optical modulation region 102 and the photodetector. The optical modulation region 102 illustrated in FIG. 6 may be regarded as a schematic diagram of a cross-section structure along the AA direction in FIG. 2A, and the optical detection region 110 illustrated in FIG. 6 may be regarded as a schematic diagram of a cross-section structure along the BB direction in FIG. 2A.

Combining FIGS. 5 and 6, in the embodiments of the disclosure, after operation S103, the method further includes: portions of the underlayer that are located at bottom of the groove 120 and are disposed on two opposite sides of the groove in a direction (i.e., the Y direction) perpendicular to an optical signal transmission direction are doped, to form a first doped region 146 and a second doped region 148 respectively.

After operation S104, the method further includes: the buried oxygen layer 122 at the optical detection region 110 is removed to expose a surface of the first doped region 146 and a surface of the second doped region 148; and a second metal electrode 150 and a third metal electrode 152 are formed on the first doped region 146 and the second doped region 148 respectively.

In some embodiments, the first doped region 146 may be an N-type doped region, and the second doped region 148 may be a P-type doped region. In some other embodiments, the first doped region 146 may be a P-type doped region and the second doped region 148 may be an N-type doped region.

Exemplarily, after the light absorbing layer 144 is formed, the buried oxygen layer 122 located in the optical detection region 110 is removed to expose the surfaces of the first doped region 146 and the second doped region 148, while exposing sidewalls of the light absorbing layer 144 disposed opposite to each other in the Y direction. A dielectric layer covering the underlayer 120 (including the first doped region 146 and the second doped region 148) located in the optical detection region 110 and the sidewalls of the light absorbing layer 144 may also be formed. A first through hole and a second through hole that penetrate the dielectric layer and expose the first doped region 146 and the second doped region148 respectively are formed by etching. A conductive material is deposited in the first through hole and the second through hole, to form the second metal electrode 150 and the third metal electrode 152, respectively.

In embodiments of the disclosure, the materials of the second metal electrode and the third metal electrode may include, but is not limited to, gold (Au), platinum (Pt), and titanium (Ti).

FIG. 6 also illustrates the thin-film lithium niobate waveguide 130 in the optical modulation region 102. The bottom of the thin-film lithium niobate waveguide 130 is in contact with the buried oxygen layer 122, and the bottom of the light absorbing layer 144 in the optical detection region 110 is in contact with the underlayer 120. That is, the heights of the bottom of the thin-film lithium niobate waveguide 130 in the optical modulation region 102 and the bottom of the light absorbing layer 144 in the optical detection region 110 in the Z direction are different from each other. More specifically, a height difference between the bottom of the thin-film lithium niobate waveguide 130 in the optical modulation region 102 and the bottom of the light absorbing layer 144 in the optical detection region 110 along the Z direction is equal to the thickness of the buried oxygen layer 122. In order to facilitate the explanation of the height difference between the bottom of the thin-film lithium niobate waveguide 130 in the optical modulation region 102 and the bottom of the light absorbing layer 144 in the optical detection region 110, FIG. 6 illustrates a schematic diagram of a cross-section structure of both the optical modulation region 102 and the optical detection region 110.

Referring to FIG. 7, FIG. 7 illustrates a schematic diagram of a cross-section structure of an optical transceiver according to embodiments of the disclosure. FIG. 7 illustrates a thin-film lithium niobate waveguide 130 located in the optical modulation region 102, a first floating waveguide 156 located in the first optical coupling region 106, and a light absorbing layer 144 located in the optical detection region 110. FIG. 7 illustrates a schematic diagram of a cross-section structure in an XZ plane.

Combining FIGS. 2B and 7, in embodiments of the disclosure, the substrate 118 further includes a first optical coupling region 106 located between the optical modulation region 102 and the optical detection region 110.

The lithium niobate layer 124 located in the first optical coupling region 106 and a portion of the underlayer 120 located in the first optical coupling region 106 are removed to form a first air cavity 154 between a remaining portion (i.e., a first silicon layer 158) of the underlayer and the buried oxygen layer 122. The buried oxygen layer 122 located in the first optical coupling region 106 forms a first floating waveguide 156. The first floating waveguide 156 is used for coupling the modulated optical signal to the light absorbing layer 144.

In some embodiments, the surface of the light absorbing layer 144 located in the optical detection region 110 and the surface of the buried oxygen layer 122 located in the first optical coupling region 106 may be substantially flush with each other. Being substantially flush with each other means that the thickness of the light absorbing layer 144 in the Z direction and the thickness of the buried oxygen layer 122 in the Z direction are same as each other.

In some other embodiments, the surface of the light absorbing layer 144 located in the optical detection region 110 may be lower than the surface of the buried oxygen layer 122 located in the first optical coupling region 106. In a subsequent process, a dielectric layer 166 may be formed on the surface of the light absorbing layer 144. The sum of the thicknesses of the light absorbing layer 144 and the dielectric layer 166 in the Z direction is equal to the thickness of the buried oxygen layer 122 in the Z direction. The material of the dielectric layer 166 may be the same as the material of the buried oxygen layer 122.

In embodiments of the disclosure, the thin-film lithium niobate waveguide 130 located in the optical modulation region 102 is in contact with the buried oxygen layer 122, and the light absorbing layer 144 located in the optical detection region 110 is in contact with the underlayer 120. Since the heights of the bottom of the thin-film lithium niobate waveguide 130 and the bottom of the light absorbing layer 144 in the Z direction are different from each other, the thin-film lithium niobate waveguide 130 in the lithium niobate modulator 104 cannot directly couple the modulated optical signal to the light absorbing layer 144 in the photodetector 112. Therefore, the first optical coupling region 106 may be provided between the lithium niobate modulator 104 and the photodetector 112, and the buried oxygen layer 122 in the first optical coupling region 106 may be fabricated as the first floating waveguide 156, so that the modulated optical signal is coupled to the light absorbing layer 144 through the first floating waveguide 156.

Here, the refractive index of the underlayer 120 (for example, silicon) is greater than the refractive index of the buried oxygen layer 122 (for example, silicon dioxide), and the refractive index of the buried oxygen layer 122 is greater than the refractive index of air. The buried oxygen layer has two surfaces disposed opposite to each other along the Z direction. A first air cavity 154 is formed at one surface of the buried oxygen layer 122; and the other surface of the buried oxygen layer 122 is directly in contact with air, with air as cladding to better prevent leakage of the modulated optical signal.

Exemplarily, a portion of the buried oxygen layer located in the first optical coupling region may be etched to form a through hole exposing the underlayer. A portion of the underlayer is removed by etching via the through hole, so as to form a first air cavity between a remaining portion of the underlayer and the buried oxygen layer. Actually, the process of forming the first floating waveguide is not specifically limited in the embodiments of the disclosure.

Further, referring back to FIGS. 2A and 2B, the substrate further includes a second optical coupling region 114, and a second optical coupling structure 116 may be formed within the second optical coupling region 114. The process of forming the second optical coupling structure 116 is similar to the process of forming the first optical coupling structure 108. That is, the lithium niobate layer 124 located in the second optical coupling region 114 and a portion of the underlayer 120 located in the second optical coupling region 114 are removed to form a second air cavity 160 between a remaining portion (i.e., a second silicon layer 164) of the underlayer and the buried oxygen layer 122. The buried oxygen layer 122 located in the second optical coupling region 114 forms a second floating waveguide 162.

In embodiments of the disclosure, the optical transceiver includes an optical modulator, a first optical coupling structure, and a photodetector sequentially along an optical signal transmission direction (i.e., the X direction). The optical transceiver includes following three operation modes. In a first operation mode, an optical signal is input into the modulator (i.e., a lithium niobate modulator) and is modulated by the modulator to output a modulated optical signal. In a second operation mode, an optical signal is input into the photodetector, and is converted into an electric signal by the photodetector, and the electric signal is output. In a third operation mode, an optical signal is input into the modulator, and is modulated by the modulator to output a modulated optical signal to the first optical coupling structure; and a first floating waveguide in the first optical coupling structure couples the modulated optical signal to the photodetector, and the modulated optical signal is converted into an electric signal by the photodetector for output.

Embodiments of the disclosure further provide an optical transceiver.

Combining FIGS. 2A and 2B, in embodiments of the disclosure, the optical transceiver 100 includes: a lithium niobate modulator 104 (as illustrated by a dashed box in FIG. 2A), a first optical coupling structure 108 and a photodetector 112 (as illustrated by a dot-dash box in FIG. 2A) that are located on a substrate 118. The first optical coupling structure 108 is located between the lithium niobate modulator 104 and the photodetector 112. The substrate 118 includes an underlayer 120, a buried oxygen layer 122, and a lithium niobate layer 124 (as illustrated in FIG. 3A) which are successively stacked. The lithium niobate modulator 104, the first optical coupling structure 108, and the photodetector 112 are located in the optical modulation region 102, the first optical coupling region 106, and the optical detection region 110 respectively.

The lithium niobate modulator 104 includes the underlayer 120, the buried oxygen layer 122 on the underlayer 120, and a thin-film lithium niobate waveguide 130 on the buried oxygen layer 122. The thin film lithium niobate waveguide 130 is formed by etching the lithium niobate layer 124.

The first optical coupling structure 108 includes a first silicon layer 158, a first floating waveguide 156, and a first air cavity 154 provided between the first silicon layer 158 and the first floating waveguide 156. The first silicon layer 158 is formed by etching a portion of the underlayer 120 located in the first optical coupling region 106. The first floating waveguide 156 is formed by the buried oxygen layer 122 located in the first optical coupling region 106.

The photodetector 112 includes: the underlayer 120 and a light absorbing layer 144 on the underlayer 120. The thin-film lithium niobate waveguide 130 is used for modulating an optical signal and outputting a modulated optical signal. The first floating waveguide 156 is used for coupling the modulated optical signal to the light absorbing layer 144. The light absorbing layer 144 is used for detecting the modulated optical signal and converting the modulated optical signal into an electric signal.

In order to illustrate the remaining portion of the underlayer 120 (i.e., the first silicon layer 158 and the second silicon layer 164) located in the first optical coupling region 106 and the second optical coupling region 114, the buried oxygen layer located in the first optical coupling region and the second optical coupling region is not illustrated in FIG. 2A. Actually, the first air cavity 154 is formed between the remaining portion of the underlayer 120 (i.e., the first silicon layer 158) located within the first optical coupling region 106 and the buried oxygen layer 122, and the buried oxygen layer 122 may serve as the first floating waveguide 156. A second air cavity 160 is formed between the remaining portion of the underlayer 120 (i.e., the second silicon layer 164) located within the second optical coupling region 114 and the buried oxygen layer 122, and the buried oxygen layer 122 may serve as a second floating waveguide 162.

As illustrated in FIG. 3H, in embodiments of the disclosure, the lithium niobate modulator 104 further includes: a first metal electrode 136 in contact with the thin-film lithium niobate waveguide 130.

As illustrated in FIG. 2A, the lithium niobate modulator 104 further includes a first metal electrode 136 in contact with the buried oxygen layer 122.

As illustrated in FIG. 6, in embodiments of the disclosure, the photodetector 112 further includes: a first doped region 146 and a second doped region 148. The first doped region 146 and the second doped region 148 are formed by doping the underlayer 120; and the light absorbing layer 144 is located between the first doped region 146 and the second doped region 148.

The photodetector 112 further includes a second metal electrode 150 and a third metal electrode 152 that are located on the first doped region 146 and the second doped region 148 respectively.

As illustrated in FIGS. 2A and 2B, the optical transceiver 100 further includes a second optical coupling structure 116. The second optical coupling structure 116 includes a second silicon layer 164, a second floating waveguide 162, and a second air cavity 160 provided between the second silicon layer 164 and the second floating waveguide 162. The second silicon layer 164 is formed by etching a portion of the underlayer 120 located in the second optical coupling region 114. The second floating waveguide 162 is formed by the buried oxygen layer 122 located in the second optical coupling region 114.

Embodiments of the disclosure provide an optical transceiver and a method for manufacturing same. The method includes following. A substrate is provided. The substrate includes an underlayer, a buried oxygen layer, and a lithium niobate layer successively stacked. The substrate includes an optical modulation region and an optical detection region. The lithium niobate layer located in the optical modulation region is etched to form a thin-film lithium niobate waveguide. The lithium niobate layer located in the optical detection region and a portion of the buried oxygen layer located in the optical detection region are removed to form a groove. The underlayer is exposed at bottom of the groove. A light absorbing layer is formed within the groove. The thin-film lithium niobate waveguide is used for modulating an optical signal and outputting a modulated optical signal, and the light absorbing layer is used for detecting the modulated optical signal and converting the modulated optical signal into an electric signal. In embodiments of the disclosure, a substrate includes an underlayer, a buried oxygen layer and a lithium niobate layer successively stacked. A thin-film lithium niobate waveguide is formed by etching, the lithium niobate layer and the buried oxygen layer that are located in the optical detection region are etched and removed to form a groove exposing the underlayer. A light absorbing layer is further formed in the groove, so that a lithium niobate modulator and a photodetector can be integrated on the same underlayer. The thin-film lithium niobate waveguide is used to modulate an optical signal and output a modulated optical signal to the optical absorbing layer, and the optical absorbing layer detects the modulated optical signal and converts the modulated optical signal into an electric signal.

It is to be understood that references throughout the specification to "an embodiment" or "one embodiment" mean that a particular feature, structure, or characteristic related to the embodiment is included in at least one embodiment of the disclosure. Thus, appearances of "in one embodiment" or "in an embodiment" throughout the description do not necessarily refer to the same embodiment. Furthermore, these particular features, structures, or properties may be incorporated in one or more embodiments in any suitable manner. It is to be understood that, in the embodiments of the disclosure, the sizes of the serial numbers of the above operations do not imply the sequential order in which the operations are performed, and shall not construe any limitation to the implementation of the embodiments of the disclosure. The order in which the operations are performed should be decided by their functions and internal logics. The above-described serial numbers of the embodiments of the disclosure are for the purpose of description only, and do not represent the advantages and disadvantages of the embodiments.

The above is only a preferred embodiment of the disclosure, and does not limit the patent scope of the disclosure accordingly. Any equivalent structural transformation made by the contents of the description and the accompanying drawings of the disclosure under the inventive concept of the disclosure, or the contents being directly/indirectly applied to other related technical fields, is included in the protection scope of the disclosure.

## Claims

1. A method for manufacturing an optical transceiver, comprising:
providing a substrate, wherein the substrate comprises an underlayer, a buried oxygen layer, and a lithium niobate layer successively stacked, and the substrate comprises an optical modulation region and an optical detection region;
etching the lithium niobate layer located in the optical modulation region to form a thin-film lithium niobate waveguide;
removing the lithium niobate layer located in the optical detection region and a portion of the buried oxygen layer located in the optical detection region to form a groove, wherein the underlayer is exposed at bottom of the groove; and
forming a light absorbing layer within the groove, wherein the thin-film lithium niobate waveguide is used for modulating an optical signal and outputting a modulated optical signal, and the light absorbing layer is used for detecting the modulated optical signal and converting the modulated optical signal into an electric signal.

2. The method for manufacturing the optical transceiver according to claim 1, wherein etching the lithium niobate layer located in the optical modulation region to form the thin-film lithium niobate waveguide comprises:
etching, in a direction perpendicular to the underlayer, the lithium niobate layer located in the optical modulation region to form the thin-film lithium niobate waveguide; wherein an etching depth of the lithium niobate layer is smaller than a thickness of the lithium niobate layer; and
after etching the lithium niobate layer located in the optical modulation region to form the thin-film lithium niobate waveguide, the method further comprises:
forming a plurality of first metal electrodes on the lithium niobate layer.

3. The method for manufacturing the optical transceiver according to claim 1, wherein etching the lithium niobate layer located in the optical modulation region to form the thin-film lithium niobate waveguide comprises:
etching, in a direction perpendicular to the underlayer, the lithium niobate layer located in the optical modulation region to form the thin-film lithium niobate waveguide and expose the buried oxygen layer; wherein an etching depth of the lithium niobate layer is equal to a thickness of the lithium niobate layer; and
after etching the lithium niobate layer located in the optical modulation region to form the thin-film lithium niobate waveguide, the method further comprises:
forming a plurality of first metal electrodes on the buried oxygen layer.

4. The method for manufacturing the optical transceiver according to claim 1, wherein the substrate further comprises an optical coupling region located between the optical modulation region and the optical detection region;
removing the lithium niobate layer located in the optical coupling region and a portion of the underlayer located in the optical coupling region to form an air cavity between a remaining portion of the underlayer and the buried oxygen layer; wherein the buried oxygen layer located in the optical coupling region forms a floating waveguide; and the floating waveguide is used for coupling the modulated optical signal to the light absorbing layer.

5. The method for manufacturing the optical transceiver according to claim 4, wherein removing the lithium niobate layer located in the optical detection region and the portion of the buried oxygen layer located in the optical detection region to form the groove comprises:
removing the lithium niobate layer located in the optical detection region to expose the buried oxygen layer;
etching, in a direction perpendicular to the underlayer, the buried oxygen layer located in the optical detection region to form the groove; wherein a depth of the groove is equal to a thickness of the buried oxygen layer.

6. The method for manufacturing the optical transceiver according to claim 5, wherein after removing the lithium niobate layer located in the optical detection region and the portion of the buried oxygen layer located in the optical detection region to form the groove, the method further comprises:
doping portions of the underlayer that are located at bottom of the groove and are disposed on two opposite sides of the groove in a direction perpendicular to an optical signal transmission direction, to form a first doped region and a second doped region respectively; and
after forming the light absorbing layer within the groove, the method further comprises:
removing the buried oxygen layer located in the optical detection region to expose a surface of the first doped region and a surface of the second doped region; and
forming a second metal electrode and a third metal electrode on the first doped region and the second doped region respectively.

7. The method for manufacturing the optical transceiver according to claim 1, wherein:
a material of the underlayer comprises silicon; and
a material of the light absorbing layer comprises germanium or a III-V material.

8. An optical transceiver, comprising: a lithium niobate modulator, an optical coupling structure and a photodetector that are located on a substrate, wherein the optical coupling structure is provided between the lithium niobate modulator and the photodetector; and the substrate comprises an underlayer, a buried oxygen layer, and a lithium niobate layer which are successively stacked;
the lithium niobate modulator comprises: the underlayer, the buried oxygen layer on the underlayer, and a thin-film lithium niobate waveguide on the buried oxygen layer; and the thin-film lithium niobate waveguide is formed by etching the lithium niobate layer;
the optical coupling structure comprises: a silicon layer, a floating waveguide, and an air cavity provided between the silicon layer and the floating waveguide; the silicon layer is formed by etching a portion of the underlayer; and the floating waveguide is formed by the buried oxygen layer; and
the photodetector comprises: the underlayer and a light absorbing layer on the underlayer; the thin-film lithium niobate waveguide is used for modulating an optical signal and outputting a modulated optical signal; the floating waveguide is used for coupling the modulated optical signal to the light absorbing layer; and the light absorbing layer is used for detecting the modulated optical signal and converting the modulated optical signal into an electric signal.

9. The optical transceiver according to claim 8, wherein the lithium niobate modulator further comprises:
a first metal electrode in contact with the thin-film lithium niobate waveguide or in contact with the buried oxygen layer.

10. The optical transceiver according to claim 8, wherein the photodetector further comprises:
a first doped region and a second doped region, wherein the first doped region and the second doped region are formed by doping the underlayer; and the light absorbing layer is located between the first doped region and the second doped region; and
a second metal electrode and a third metal electrode located on the first doped region and the second doped region respectively.
